# EUROPEAN PATENT APPLICATION

(11) **EP 4 269 908 A1**
(43) Date of publication of application: **01.11.2023**
(21) Application number: 21909075.0
(22) Date of filing: 30.11.2021
(51) Int. Cl.: F25B 41/34, F16K 1/32

(54) **ELECTRONIC EXPANSION VALVE**

(30) Priority: 23.12.2020 CN 202011543172
(71) Applicant: Valeo Systemes Thermiques, 78320 Le Mesnil Saint Denis (FR)
(72) Inventor: LI, Qing, Jingzhou, Hubei 434007 (CN); WAN, Xuanchen, Jingzhou, Hubei 434007 (CN)
(74) Representative: Valeo Systèmes Thermiques
(86) International application number: PCT/CN2021/134190
(87) International publication number: WO 2022/135076

(57) **Abstract**

The present invention relates to an electronic expansion valve. In the present invention, a valve component and a main electric control board are respectively located on different sides of a valve body, such that a main control cavity of a main shell can have a relatively large extension space on the side, on which the main electric control board is provided, of the valve body, and accordingly, the main control cavity can accommodate the main electric control board with a relatively large size; moreover, the main electric control board with a relatively large size can allow for more electronic devices to be integrated, such that it is very beneficial for the intelligent control of the electronic expansion valve. Therefore, the electronic expansion valve provided in the present invention has the advantage of reasonable position arrangement of parts.

## Description

### Technical Field

The present invention relates to an electronic expansion valve.

### Background Art

A conventional air-conditioning system comprises four major components, namely a compressor, an evaporator, a condenser, and a throttling device. Depending on the requirements on the air-conditioning system, the throttling device may comprise expansion valves and capillaries. Expansion valves may be classified as thermal expansion valves and electronic expansion valves based on the drive method. Electronic expansion valves may be classified as electromagnetically-driven electronic expansion valves and motor-driven electronic expansion valves based on the drive method.

An automobile air-conditioning system consists of the four major components as described above. In terms of the throttling device, expansion valves are usually used in automobile air-conditioning systems. Chinese patent application CN101551174A discloses an automobile air-conditioning system that uses thermal expansion valves as the throttling device. In other existing techniques, electronic expansion valves are also used as the throttling device in automobile air-conditioning systems.

As the automobile industry moves toward electrification, cars using power batteries as the drive source have become more and more popular. Power batteries will generate heat during charging and discharging, resulting in temperature rise of the batteries. It is known from the technical solution in Chinese patent application CN101551174A that a refrigerant branch for cooling batteries in the automobile air-conditioning system may be used to maintain stable temperature of the batteries. Electronic expansion valves may be provided on this cooling branch to realize throttling of the refrigerant.

An electronic expansion valve in the prior art comprises a valve body, a valve assembly, sensors, and an electronic control board. The electronic expansion valves in the prior art have the disadvantage of unreasonable arrangement of the parts and components.

### Summary of the Invention

The present invention is intended to provide an electronic expansion valve that has the advantage of reasonable arrangement of the parts and components.

The electronic expansion valve to achieve the purpose comprises:
a valve body, which has a first refrigerant inlet and a first refrigerant outlet, wherein a first refrigerant channel is formed between the first refrigerant inlet and the first refrigerant outlet,
a valve assembly, used to throttle refrigerant in the first refrigerant channel, and
a main electronic control board, which is electrically connected to the valve assembly,
characterized in that electronic expansion valves further comprise:
   a housing assembly, which comprises a main housing, the main housing comprising a first main body portion and a first connecting portion, the first main body portion having a main control cavity, and the main electronic control board being provided in the main control cavity, wherein the valve assembly and the main electronic control board are respectively located on different sides of the valve body; and the first connecting portion is fixed to the valve body, wherein the first connecting portion and the main electronic control board are located on the same side of the valve body.

In one embodiment of the present invention, the first connecting portion is located outside the main control cavity.

In one embodiment of the present invention, the first main body portion has a wide portion and a narrow portion arranged in a length direction; in a width direction transverse to the length direction, the width of the wide portion is greater than the width of the narrow portion; wherein the first connecting portion and the wide portion are arranged in the length direction; and the first connecting portion and the narrow portion are arranged in the width direction.

In one embodiment of the present invention, two said first connecting portions are distributed on two sides of the narrow portion in the width direction.

In one embodiment of the present invention, in the length direction, the first connecting portion extends from the wide portion until it is flush with an edge of the narrow portion; and/or in the width direction, the first connecting portion extends from the narrow portion until it is flush with an edge of the wide portion.

In one embodiment of the present invention, the valve body further has a second refrigerant inlet and a second refrigerant outlet, wherein a second refrigerant channel is formed between the second refrigerant inlet and the second refrigerant outlet; the electronic expansion valves further comprise a refrigerant sensor which is used to detect refrigerant in the second refrigerant channel; the main electronic control board is electrically connected to the refrigerant sensor.

In one embodiment of the present invention, the housing assembly further comprises an auxiliary housing, the auxiliary housing comprising a second main body portion and a second connecting portion; the second main body portion has an auxiliary control cavity and a sensor hole; the sensor hole is connected to the auxiliary control cavity; the refrigerant sensor goes through the sensor hole; a part of the refrigerant sensor is located in the auxiliary control cavity and is electrically connected to the main electronic control board; the other part of the refrigerant sensor is located outside the auxiliary control cavity and is used to detect refrigerant in the second refrigerant channel; the second connecting portion is detachably connected to the first connecting portion.

In one embodiment of the present invention, the first connecting portion, the second connecting portion and the valve body are stacked, and are joined in the stacking direction to become one unit; wherein one of the first connecting portion and the second connecting portion is tightly held between the valve body and the other one of the first connecting portion and the second connecting portion.

In one embodiment of the present invention, the electronic expansion valve further comprises a housing assembly connector; the housing assembly connector joins the stacked first connecting portion, second connecting portion and valve body to form one unit, wherein the housing assembly connector passes through at least one of the first connecting portion and the second connecting portion.

In one embodiment of the present invention, the first main body portion extends from one side of the valve body to another side of the valve body by going around a corner of the valve body; wherein the first main body portion has a first surface, a connecting surface and a second surface which are contiguous; the first surface and the second surface are respectively located on different sides of the valve body, and arranged facing the valve body; wherein the first surface and the main electronic control board are located on the same side of the valve body, the second surface and the valve assembly are located on the same side of the valve body; and the connecting surface extends from the first surface to the second surface by going around a corner of the valve body.

In one embodiment of the present invention, the main housing further comprises a step portion; the step portion is respectively connected to the first surface, the connecting surface and the second surface.

In one embodiment of the present invention, the step portion comprises a support face; the support face is configured to be supported on the valve body, and the support face and the valve assembly are located on the same side of the valve body.

Favorable and advanced benefits of the present invention are: since the valve assembly and the main electronic control board are located on different sides of the valve body, the main control cavity of the main housing can have a larger extension space on the side of the valve body where the main electronic control board is disposed, so that the main control cavity can accommodate a main electronic control board of a larger size; the main electronic control board of a larger size can integrate more electronic devices, which is very favorable for the intelligent control of the electronic expansion valve. Therefore, the electronic expansion valve provided by the present invention has the advantage of reasonable arrangement of the parts and components. The heat management assembly provided by the present invention comprises the electronic expansion valve. The automobile air-conditioning system provided by the present invention comprises the heat management assembly.

### Brief Description of the Drawings

The above and other features, characteristics and advantages of the present invention will become clearer in the description below by referring to the accompanying drawings and embodiments. In the drawings:
Figure 1 is a schematic diagram of an automobile air-conditioning system;
Figures 2A to 2D are schematic diagrams of the electronic expansion valve in a first embodiment of the present invention;
Figure 3 is an exploded view of the electronic expansion valve in a first embodiment of the present invention;
Figure 4 is a section view of Figure 2C viewed from direction A-A, wherein the dotted line with an arrow shows the flowing path of the refrigerant;
Figure 5 is a section view of Figure 2D viewed from direction B-B;
Figure 6 is a section view of Figure 2C viewed from direction C-C;
Figure 7 is a section view of Figure 2D viewed from direction D-D;
Figures 8A and 8B are schematic diagrams of the main housing in a first embodiment of the present invention;
Figures 9A to 9C are schematic diagrams of the valve body;
Figure 9D is a section view of the valve body;
Figures 10A to 10D are schematic diagrams of the electronic expansion valve in a second embodiment of the present invention;
Figure 11 is an exploded view of the electronic expansion valve in a second embodiment of the present invention;
Figure 12 is a section view of Figure 10C viewed from direction E-E;
Figure 13 is a section view of Figure 10D viewed from direction F-F;
Figures 14A and 14B are schematic diagrams of the main housing in a second embodiment of the present invention;
Figures 15A and 15B are schematic diagrams of the auxiliary housing in a second embodiment of the present invention;
Figures 16 A to 16D are schematic diagrams of the electronic expansion valve in a third embodiment of the present invention;
Figure 17 is an exploded view of the electronic expansion valve in a third embodiment of the present invention;
Figure 18 is a section view of Figure 16C viewed from direction G-G;
Figure 19 is a section view of Figure 16D viewed from direction J-J;
Figure 20 is a section view of Figure 16C viewed from direction H-H;
Figures 21A and 21B are schematic diagrams of the main housing in a third embodiment of the present invention;
Figures 22A and 22B are schematic diagrams of the auxiliary housing in a third embodiment of the present invention;
Figure 23 is a section view of an electronic expansion valve, showing the connections among the main housing, the sensor and the valve body, wherein the opening of the main housing faces away from the valve body;
Figure 24 is a section view of an electronic expansion valve, showing the connections among the main housing, the sensor and the valve body, wherein the opening of the main housing faces the valve body;
Figure 25 is a section view of a sensor;
Figures 26A - 26D are schematic drawings of an electronic expansion valve in a fourth embodiment of the present invention, wherein the main cover and auxiliary cover have been hidden in Figs. 26C and 26D;
Figures 27A - 27B are schematic drawings of the main housing;
Figure 28A is a schematic drawing of the main housing and the auxiliary housing in a connected state;
Figure 28B is a schematic drawing of the auxiliary housing;
Figure 29 is a sectional view in direction K-K in Figure 26B;
Figure 30 is a sectional view in direction M-M in Figure 26B.

### Specific Embodiments

Various embodiments or examples of the subject technical solution are disclosed below. To simplify the disclosure, specific examples of various components and arrangements are described below. Of course, these are only examples, and are not intended to limit the scope of the present invention. For example, the distribution of a first feature in a second feature in the subsequent description may be implemented as distribution by direct association between the first feature and the second feature, or as an additional feature formed between the first feature and the second feature so that the first feature and the second feature are not directly associated. In addition, the numerals and/or letters in the drawings may be repeated in different examples for these descriptions. The repetition is intended for briefness and clarity, and does not in itself indicate a connection between various embodiments and/or structures. Further, when a first element is described in connection or in combination with a second element, the description includes embodiments where the first element and the second element are directly connected or joined with each other, and may also include those where one or more intermediate elements are used so that the first element and the second element are indirectly connected or joined with each other.

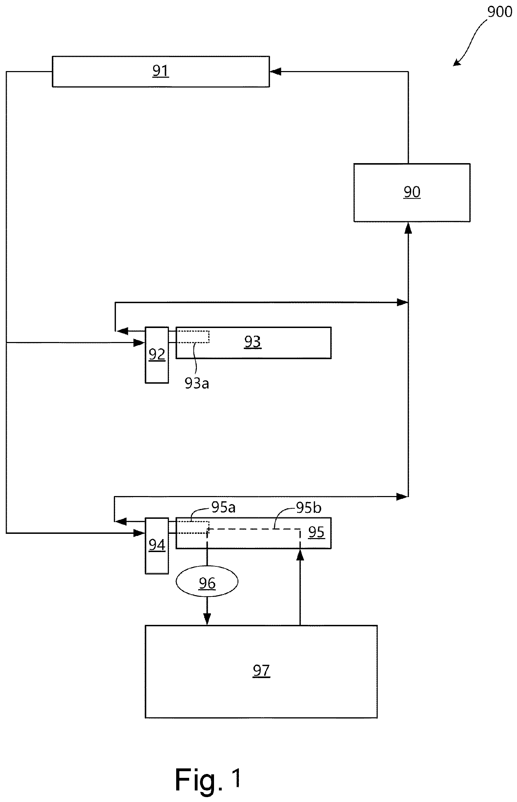

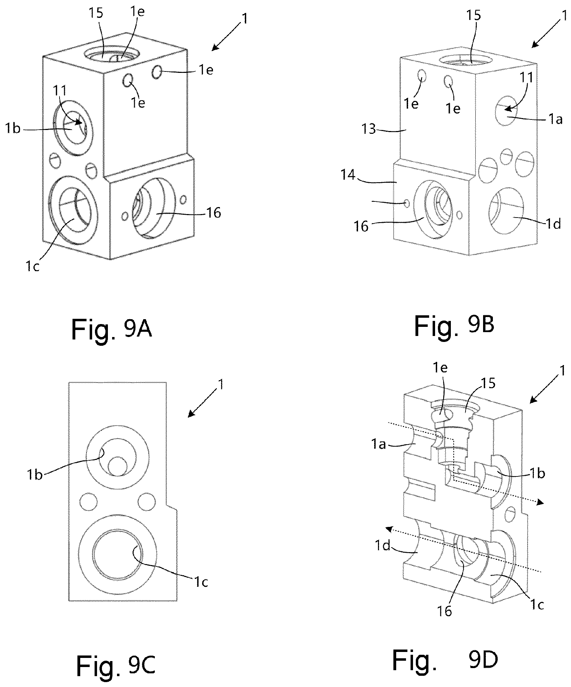

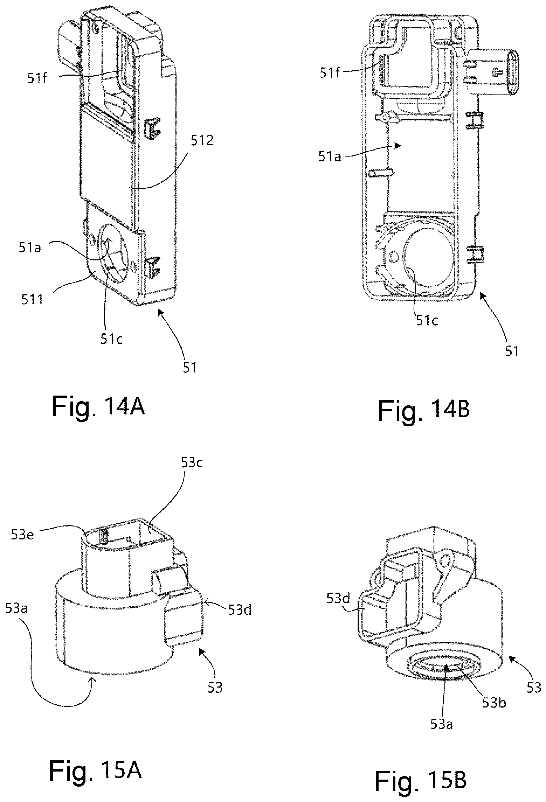

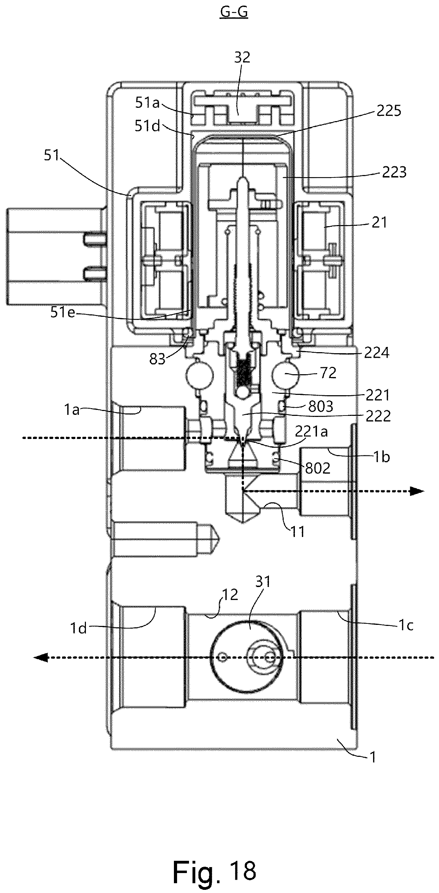

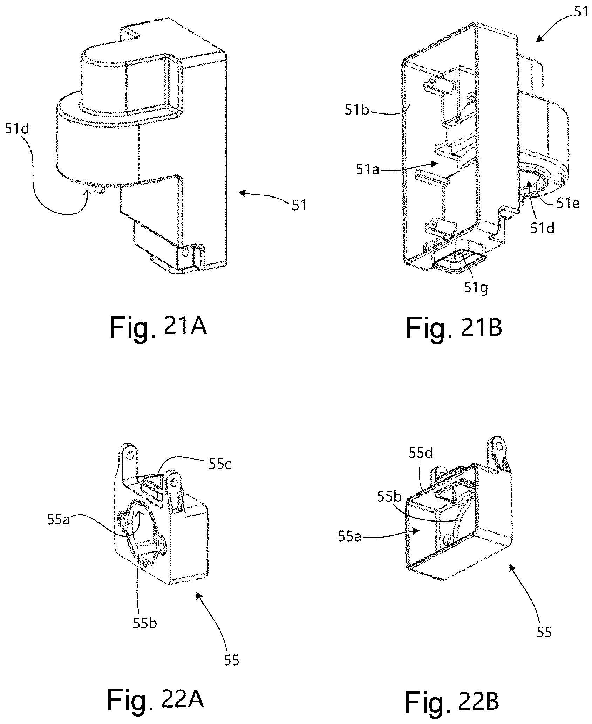

It should be noted that Figures 1 to 25 are all used as examples and are not drawn proportionally, and may not constitute limitation on the actual scope of the present invention.

Figure 1 shows the automobile air-conditioning system 900 of one embodiment of the present invention. The automobile air-conditioning system 900 comprises a compressor 90, a condenser 91, electronic expansion valves 92 and 94, an evaporator 93, a heat exchanger 95, a pump 96, a battery module 97, a pipeline for the refrigerant, and a pipeline for the coolant. These pipelines connect various parts of the automobile air-conditioning system 900.

The evaporator 93 and the electronic expansion valve 92 together form a heat management assembly. The electronic expansion valve 92 is mounted on the evaporator 93, and is formed integrally with the evaporator 93. The evaporator 93 has an evaporator channel 93a, and refrigerant flows in the evaporator channel 93a. The evaporator channel 93a and the electronic expansion valve 92 are connected.

The heat exchanger 95 and the electronic expansion valve 94 together form a heat management assembly. The electronic expansion valve 94 is mounted on the heat exchanger 95, and is formed integrally with the heat exchanger 95. The heat exchanger 95 has a first heat exchange channel 95a and a second heat exchange channel 95b; the first heat exchange channel 95a and the second heat exchange channel 95b are not connected to each other. Refrigerant flows in the first heat exchange channel 95a, and coolant flows in the second heat exchange channel 95b. The first heat exchange channel 95a is connected to the electronic expansion valve 94, and the second heat exchange channel 95b is connected to the circuit where the pump 96 and the battery module 97 are provided.

During the operation of the automobile air-conditioning system 900, the heat generated by the battery module 97 is taken away by the coolant and enters the second heat exchange channel 95b of the heat exchanger 95 along with the coolant. After being throttled by the electronic expansion valve 94, the refrigerant flows out of the electronic expansion valve 94 and enters the first heat exchange channel 95a in a low temperature and low pressure state. In the heat exchanger 95, the heat in the coolant in the second heat exchange channel 95b is absorbed by the refrigerant in the first heat exchange channel 95a, so that the automobile air-conditioning system 900 can cool the battery module 97.

After being throttled by the electronic expansion valve 92, the refrigerant flows out of the electronic expansion valve 92 and enters the evaporator channel 93a in a low temperature and low pressure state. The evaporator 93 allows air flow to blow through the outside of the evaporator channel 93a to absorb the heat in the air flow, thereby cooling the air flow. The cooled air flow may be sent into the vehicle cabin to regulate the ambient temperature and humidity in the cabin.

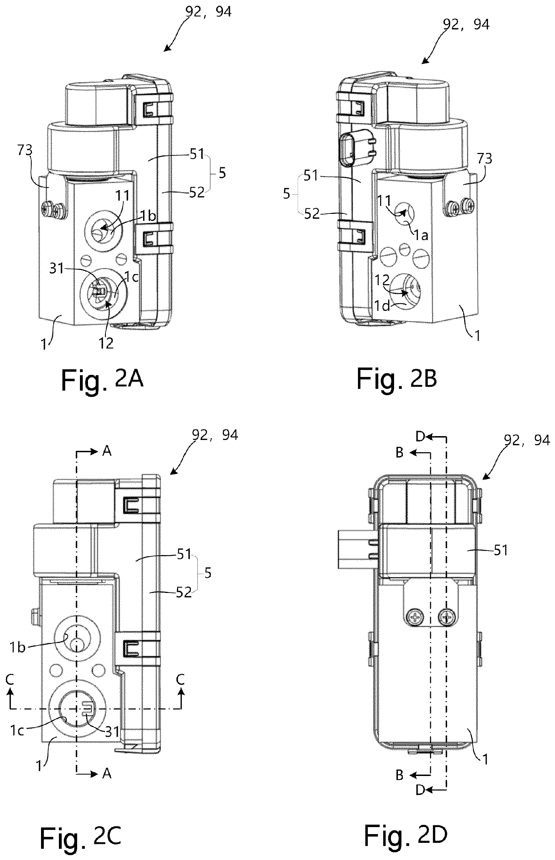

Figures 2A to 2D and Figures 3, 4, 5, 6, 7, 8A and 8B show a first embodiment of the electronic expansion valves 92 and 94 in the present invention. In this embodiment, the electronic expansion valves 92 and 94 comprise a valve body 1, a valve assembly 2, a refrigerant sensor 31, a main electronic control board 4, and a housing assembly 5.

Referring to Figures 2A to 2D, Figure 4 and Figures 9A to 9D, the valve body 1 is in a block shape, and has three sets of two opposite sides in space. In the internal structure, the valve body 1 has a first refrigerant inlet 1a and a first refrigerant outlet 1b, wherein a first refrigerant channel 11 going through the valve body 1 is formed between the first refrigerant inlet 1a and the first refrigerant outlet 1b. The first refrigerant inlet 1a and the first refrigerant outlet 1b are preferably arranged on two opposite sides of the valve body 1. In embodiments not shown, the first refrigerant inlet 1a and the first refrigerant outlet 1b may also be provided on the same side of the valve body 1, or the first refrigerant inlet 1a and the first refrigerant outlet 1b may also be provided on two adjacent sides of the valve body 1. The first refrigerant outlet 1b is connected to the inlet of the evaporator channel 93a or the inlet of the first heat exchange channel 95a.

For the valve assembly 2 to throttle the refrigerant in the first refrigerant channel 11, the valve body 1 is preferably provided with a first mounting cavity 15 on a side without the first refrigerant inlet 1a and the first refrigerant outlet 1b. The first mounting cavity 15 extends from the outer surface of the valve body 1 to the inside of the valve body 1, and is connected to the first refrigerant channel 11. The valve assembly 2 is inserted into the first mounting cavity 15, and at least part of the valve assembly 2 is located in the first refrigerant channel 11, to throttle the refrigerant in the first refrigerant channel 11.

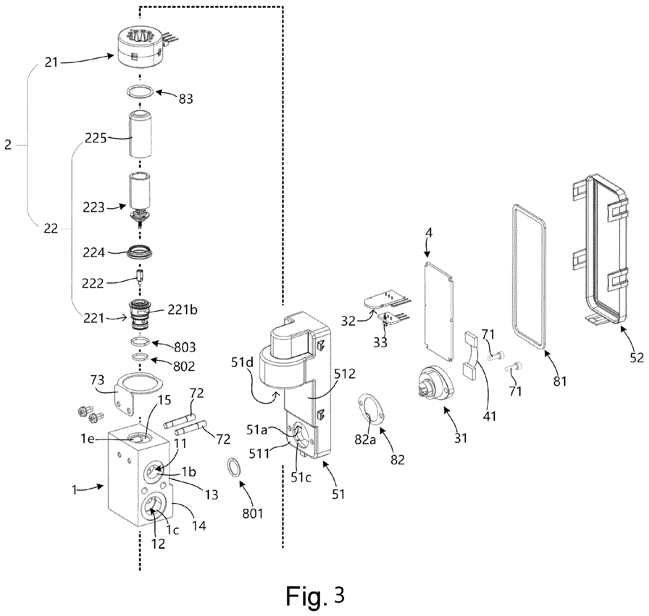

As shown in Figures 3, 4 and 5, the valve assembly 2 comprises a coil assembly 21 and a valve element assembly 22. One end of the valve element assembly 22 is inserted into the first mounting cavity 15 of the valve body 1, and extends into the first refrigerant channel 11. The part of the valve element assembly 22 inserted into the valve body 1 is fixed on the valve body 1. The other end of the valve element assembly 22 is exposed to the outside of the valve body 1. The coil assembly 21 is arranged on the outside of the valve body 1, and is sleeved on the valve element assembly 22. The coil assembly 21 is electrically connected to the main electronic control board 4. When it is energized, the coil assembly 21 can drive the valve element assembly 22 to move, so that the valve element assembly 22 can throttle the refrigerant in the first refrigerant channel 11. In embodiments not shown, the valve assembly 2 may also be an electromagnetically-driven valve assembly.

The valve element assembly 22 comprises a valve seat 221, a valve element 222, a connecting seat 224, a rotor assembly 223 and a housing 225 assembled along an axis (as shown by the dotted line in Figure 3) of the valve assembly 2. The valve seat 221 has a valve hole 221a, and the part of the valve seat 221 with the valve hole 221a is arranged inside the valve body 1 and is located in the first refrigerant passage 11. The valve seat 221 is fixed on the valve body 1, and the connecting seat 224 can be welded to the valve body 1 and the valve seat 221 separately. The rotor assembly 223 and the housing 225 are respectively connected to the connecting seat 224. The rotor assembly 223 comprises a permanent magnet which can rotate around an axis of the valve assembly 2 under the action of the exciting magnetic field generated by the energized coil assembly 21. The rotor assembly 223 further comprises a drive assembly that converts the rotation of the permanent magnet into movement along an axis of the valve assembly 2.

The valve element 222 can be slidably assembled in the valve seat 221. The permanent magnet of the rotor assembly 223 is used to drive the energized coil assembly 21, and to drive the valve element 222 to move along the axis of the valve assembly 2 relative to the valve seat 221 through the drive assembly, so as to adjust the opening of the valve hole 221a. When the refrigerant in the first refrigerant passage 11 passes through the valve hole 221a with small opening, the refrigerant is throttled.

In order to improve the integration of the heat management assembly, the valve body 1 is also provided with a second refrigerant inlet 1c and a second refrigerant outlet 1d. A second refrigerant channel 12 going through the valve body 1 is formed between the second refrigerant inlet 1c and the second refrigerant outlet 1d. The second refrigerant channel 12 and the first refrigerant channel 11 are not connected to each other. This design allows the valve body 1 to form part of the refrigerant outlet flow path of the evaporator 93 or the heat exchanger 95. In this embodiment, the second refrigerant inlet 1c is connected to the outlet of the evaporator channel 93a or the outlet of the second heat exchange channel 95b.

The second refrigerant inlet 1c and the second refrigerant outlet 1d are preferably arranged on two opposite sides of the valve body 1. In a more specific embodiment, the first refrigerant inlet 1a and the second refrigerant outlet 1d are preferably arranged on the same side of the valve body 1, and the first refrigerant outlet 1b and the second refrigerant inlet 1c are preferably arranged on the same side of the valve body 1. In embodiments not shown, the second refrigerant inlet 1c and the second refrigerant outlet 1d may also be provided on the same side of the valve body 1, or the second refrigerant inlet 1c and the second refrigerant outlet 1d may also be provided on two adjacent sides of the valve body 1.

For the refrigerant sensor 31 to detect the refrigerant in the second refrigerant channel 12, the valve body 1 is preferably provided with a second mounting cavity 16 on a side without the second refrigerant inlet 1c and the second refrigerant outlet 1d. The second mounting cavity 16 extends from the outer surface of the valve body 1 to the inside of the valve body 1, and is connected to the second refrigerant channel 12. The refrigerant sensor 31 is inserted into the second mounting cavity 16, and at least part of the refrigerant sensor 31 is located in the second refrigerant channel 12, to detect the refrigerant in the second refrigerant channel 12.

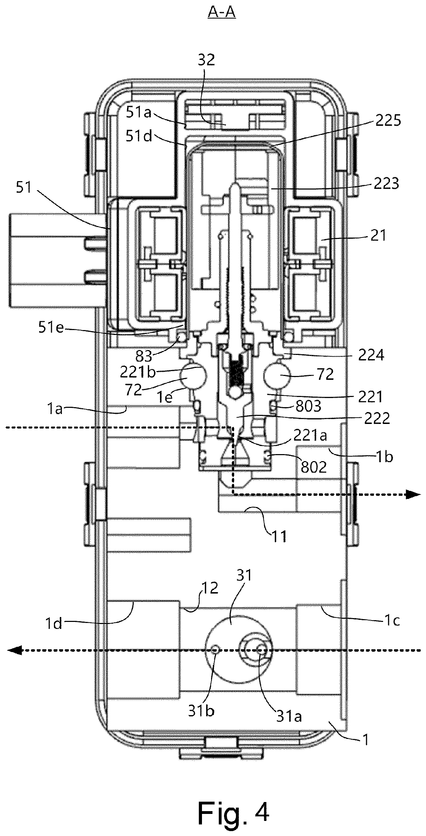

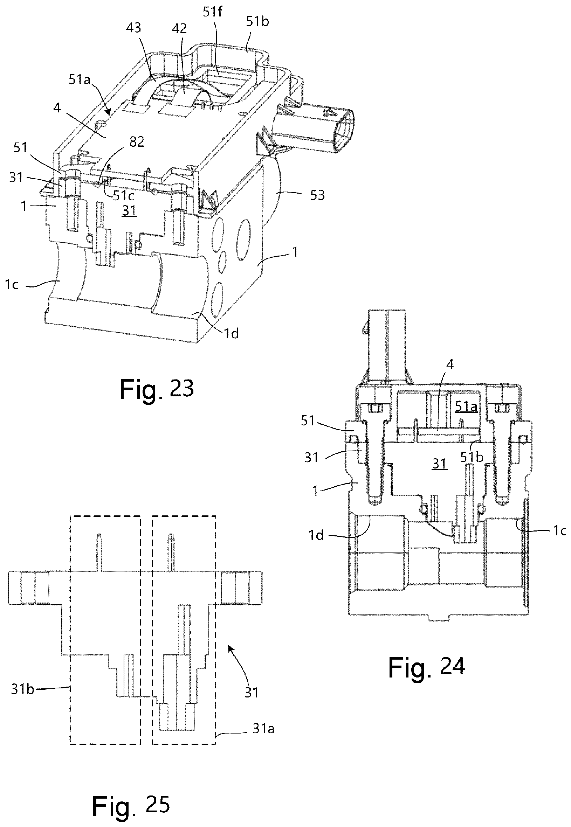

The refrigerant sensor 31 is preferably a temperature and pressure sensor, which integrates a temperature detection function and a pressure detection function. Structurally, the refrigerant sensor 31 has a temperature detection portion 31a and a pressure detection portion 31b arranged side by side. As shown in Figures 4 and 25, the temperature detection portion 31a and the pressure detection portion 31b are arranged in a line along the refrigerant flow direction, and the temperature detection portion 31a is preferably arranged upstream of the pressure detection portion 31b. The temperature detection portion 31a and the pressure detection portion 31b are preferably aligned with the centerline of the second refrigerant channel 12. This design helps to reduce the length of the refrigerant sensor 31 in the direction where it is inserted into the valve body 1.

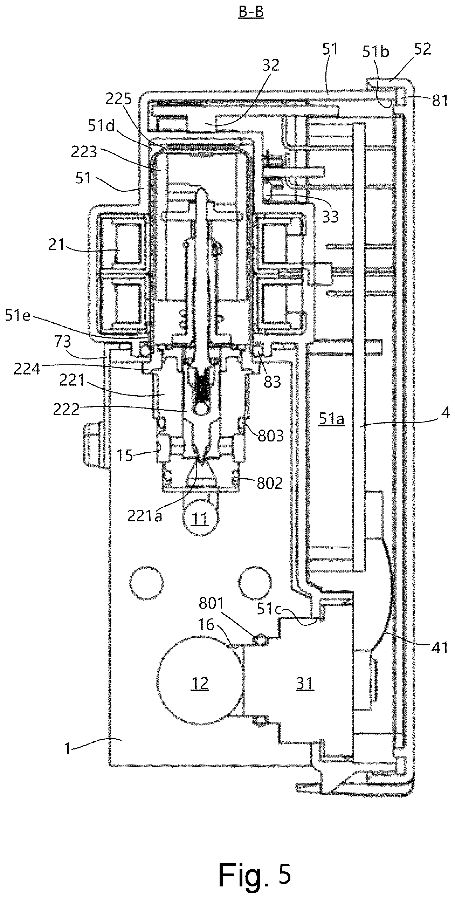

As shown in Figures 3 and 5, the refrigerant sensor 31 and the valve assembly 2 may be respectively arranged on different sides of the valve body 1 in orientation, for example, on two adjacent sides of the valve body 1. Accordingly, the first mounting cavity 15 and the second mounting cavity 16 are respectively arranged on different sides of the valve body 1. In embodiments not shown, the refrigerant sensor 31 and the valve assembly 2 may also be arranged on the same side of the valve body 1. Accordingly, the first mounting cavity 15 and the second mounting cavity 16 are arranged on the same side of the valve body 1.

Again, referring to Figures 3 and 5, the main electronic control board 4 is electrically connected to the valve assembly 2 and the refrigerant sensor 31 respectively. The refrigerant sensor 31 detects the refrigerant in the second refrigerant channel 12 to generate detection signals, for example, a temperature signal and a pressure signal; the main electronic control board 4 can receive the detection signals. The main electronic control board 4 is also configured to send a driving signal to the valve assembly 2 to drive the valve assembly 2 to move, thereby throttling the refrigerant in the first refrigerant channel 11. More specifically, the main electronic control board 4 also has a microprocessor, which can process the detection signals generated by the refrigerant sensor 31 and generate said driving signal.

An electrical connection may be implemented by pins or flexible conductive parts, for example, flexible flat cables. Electrical connections include detachable electrical connections. As shown in Figures 3 and 5, the electronic expansion valves 92 and 94 comprise flexible conductive parts 41; the flexible conductive parts 41 are detachably connected to the refrigerant sensor 31 and the main electronic control board 4. For example, one end of the flexible conductive part 41 is configured to snap onto the main electronic control board 4 and and electrically connected thereto, and the other end is welded to the refrigerant sensor 31. In the embodiment shown in Figures 3 and 5, the valve assembly 2 is electrically connected to the main electronic control board 4 by pins.

As shown in Figures 3 and 5, the main electronic control board 4 and the refrigerant sensor 31 may be provided on the same side of the valve body 1 in orientation. In Figure 5, the main electronic control board 4 is arranged side by side with the refrigerant sensor 31 and is detachably and electrically connected through the flexible conductive part 41. The main electronic control board 4 and the refrigerant sensor 31 arranged side by side help to achieve a more compact structure of the electronic expansion valves 92 and 94.

In embodiments not shown, the main electronic control board 4 and the refrigerant sensor 31 may also be provided on different sides of the valve body 1, for example, with the main electronic control board 4 and the refrigerant sensor 31 respectively provided on two adjacent sides of the valve body 1.

Again, referring to Figures 2A, 2B, 3, 5 and 6, the main electronic control board 4 is accommodated in the housing assembly 5, and the refrigerant sensor 31 is connected to the housing assembly 5. More specifically, the refrigerant sensor 31 is tightly pressed against the housing assembly 5. Such a design helps to improve the installation stability of the refrigerant sensor 31 and achieve a compact structure of the electronic expansion valves 92 and 94.

Again, referring to Figure 5, the housing assembly 5 comprises a main housing 51; the main housing 51 has a main control cavity 51a; the main electronic control board 4 is provided in the main control cavity 51a. The valve assembly 2 and the main electronic control board 4 are located on different sides of the valve body 1. With such a design, the main control cavity 51a can have a larger extension space on the side of the valve body 1 where the main electronic control board 4 is disposed, so that the main control cavity 51a can accommodate a main electronic control board 4 of a larger size; the main electronic control board 4 of a larger size can integrate more electronic devices, which is very favorable for the intelligent control of the electronic expansion valve.

Again, referring to Figure 5, more specifically, the valve assembly 2 and the main electronic control board 4 are respectively located on two adjacent sides of the valve body 1. Such a design helps to improve the compactness of the electronic expansion valves 92 and 94. Preferably, the valve assembly 2 and the main electronic control board 4 are respectively located on two adjacent sides of the valve body 1 without the refrigerant inlet and outlet.

In embodiments not shown, the valve assembly 2, the main electronic control board 4 and the refrigerant sensor 31 may be respectively located on three different sides of the valve body 1 without the refrigerant inlet and outlet.

The electronic expansion valves 92 and 94 have installation positions, which may be the positions of the electronic expansion valves 92 and 94 after they are installed on a vehicle. These installation positions are also the positions of the electronic expansion valves 92 and 94 when they are in operation. In order to prevent the refrigerant and the lubricating oil and impurities contained therein from depositing in the valve assembly 2, for the electronic expansion valves 92 and 94 in the installation positions, the valve assembly 2 is located on the upper side of the valve body 1 with the vertical direction as the reference. With such a design, the refrigerant entering the housing 225 of valve assembly 2 during the operation of the electronic expansion valves 92 and 94 will flow out of the housing 225 under the action of gravity after the electronic expansion valves 92 and 94 stop working, thereby preventing the refrigerant from being deposited inside the valve assembly 2. In this installation position, the angle between the axis of the valve assembly 2 and the vertical direction should be less than 90°, preferably less than or equal to 75°.

Again, referring to Figures 3, 4, 5 and 7, the electronic expansion valves 92 and 94 further comprise valve assembly sensors 32 and 33; the valve assembly sensors 32 and 33 are electrically connected to the main electronic control board 4; the valve assembly sensors 32 and 33 are used to sense the valve assembly 2. The valve assembly sensors 32 and 33 are provided in the main control cavity 51a. Any sensor that can detect various parts of the valve assembly and generate feedback signals fall in the scope of the valve assembly sensors 32 and 33. For example, the valve assembly sensors 32 and 33 may be Hall sensors that detect changes in the magnetic field of the permanent magnet of the rotor assembly 223, or position sensors that detect the movement of the valve element 222 along the axis of the valve assembly 2. The valve assembly sensors 32 and 33 may detect an abnormal working status of the valve assembly 2, for example, out of step and locked rotor.

The Hall sensor can sense changes in the magnetic field of the permanent magnet of the rotor assembly 223 and generate a feedback signal. This feedback signal is transmitted to the microprocessor of the main electronic control board 4.

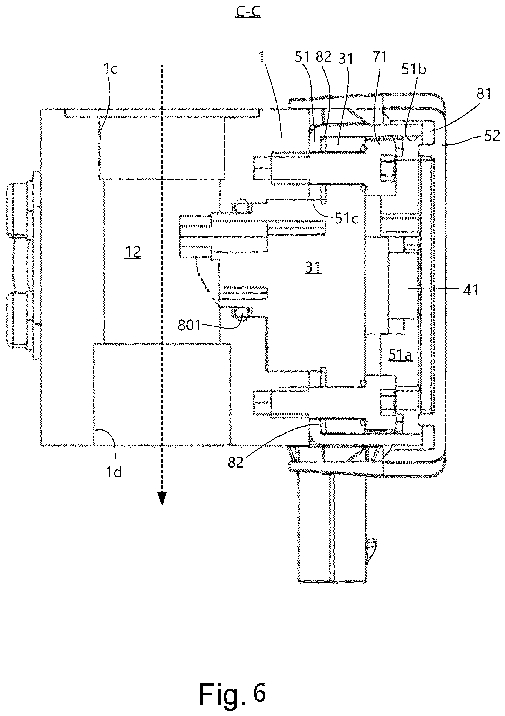

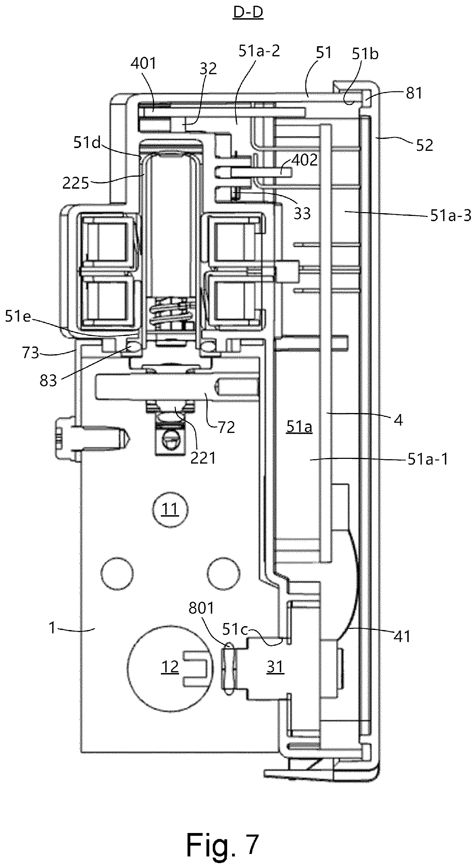

As shown in Figures 6 and 7, the refrigerant sensor 31, the main housing 51 and the valve body 1 are stacked and are joined in the stacking direction to become one unit; one of the main housing 51 or the refrigerant sensor 31 is tightly held between the valve body 1 and the other one of the main housing 51 and the refrigerant sensor 31. Such a design helps to reduce the assembly procedures of the electronic expansion valves 92 and 94, and achieve a compact structure of the electronic expansion valves 92 and 94.

Again, referring to Figure 6, the stacked refrigerant sensor 31, main housing 51 and valve body 1 are connected through the sensor connector 71 to become one unit. The sensor connector 71 may be a screw. The sensor connector 71 goes through at least one of the main housing 51 and the refrigerant sensor 31 and are fixedly connected to the valve body 1.

In the embodiment shown in Figure 6, the main housing 51 is held between the refrigerant sensor 31 and the valve body 1, and the sensor connector 71 goes through the refrigerant sensor 31 and the main housing 51.

In embodiments not shown, the part of the refrigerant sensor 31 located inside the valve body 1 is connected to the valve body 1 via a thread, and the part of the refrigerant sensor 31 outside the valve body tightly presses the main housing 51 against the valve body 1.

Referring to Figures 3, 4, 5, 8A and 8B, the housing assembly 5 further comprises a main cover 52; the main housing 51 has a main opening 51b, which is connected to the main control cavity 51a; the main opening 51b may face away from the valve body 1 and allow the main electronic control board 4 to enter the main control cavity 51a; the main cover 52 is used to cover the main housing 51 to close the main opening 51b.

Again, referring to Figures 3, 4, 5, 8A and 8B, the main seal 81 is arranged along the circumference of the main opening 51b and is tightly held between the main cover 52 and the main housing 51 to seal the main opening 51b. One of the main housing 51 or the main cover 52 may be provided with a groove for accommodating the main seal 81.

Again, referring to Figures 3, 4, 5, 8A and 8B, the main housing 51 is provided with a sensor hole 51c, and the sensor hole 51c is connected to the main control cavity 51a; the refrigerant sensor 31 goes through the sensor hole 51c; a part of the refrigerant sensor 31 is located in the main control cavity 51a and is electrically connected to the main electronic control panel 4; the other part of the refrigerant sensor 31 is located outside the main control cavity 51a and is used to detect the refrigerant in the second refrigerant passage 12. The part of the refrigerant sensor 31 located in the main control cavity 51a is tightly pressed against the main housing 51.

As shown in Figures 3 and 6, the electronic expansion valves 92 and 94 further comprise sensor seals 82, which are arranged along the circumference of the sensor hole 51c; the sensor seal 82 is tightly held between the refrigerant sensor 31 and the main housing 51 to seal the sensor hole 51c.

To secure the valve assembly 2, as shown in Figures 3, 4 and 7, the electronic expansion valves 92 and 94 further comprise a valve assembly connector 72; the valve assembly connector 72 is configured to be inserted into the valve body 1 from the side of the valve body 1 without the valve assembly 2 and to position-limitedly cooperate with a part of the valve assembly 2 located in the valve body 1, thereby fixing the valve assembly 2 on the valve body 1. With such a design, the valve assembly 2 is easily assembled on the valve body 1, and the valve assembly connector 72 will not interfere with the valve assembly 2 when being inserted into the valve body 1.

More specifically, the valve assembly connector 72 is configured to be inserted into the valve body 1 from the side of the valve body 1 where the main electronic control board 4 is provided. The valve assembly connector 72 may be a screw.

As shown in Figures 4, 5, 7, 8A and 8B, the main housing 51 has a drive cavity 51d and a valve assembly hole 51e, the valve assembly hole 51e is connected to the drive cavity 51d; the valve assembly 2 goes through the valve assembly hole 51e; a part of the valve assembly 2 is located in the drive cavity 51d and is electrically connected to the main electronic control board 4; the other part of the valve assembly 2 is located outside the main control cavity 51a and is used to throttle the refrigerant in the first refrigerant channel 11.

Again, referring to Figures 4 and 5, the coil assembly 21 is fixed in the drive cavity 51d as an insert by the injection molding process. The valve element assembly 22 is inserted into the drive cavity 51d through the valve assembly hole 51e and is positioned in the middle of the coil assembly 21. The coil assembly 21 is electrically connected to the main electronic control board 4 in the main control cavity 51a through a pin, wherein the pin is an insert in the injection molding process that goes through the partition wall between the drive cavity 51d and the main control cavity 51a. The valve seat 221 and the valve element 222 are arranged outside the drive cavity 51d.

As shown in Figures 3, 4 and 5, the valve assembly seal 83 is arranged along the circumference of the valve assembly hole 51e; the valve assembly seal 83 is tightly held between the valve assembly 2 and the main housing 51 to seal the valve assembly hole 51e. The valve assembly seal 83 is pressed on the cover 225 of the valve assembly 2 by the main housing 51 along the radial direction of the valve assembly 2. More specifically, the valve assembly seal 83 is pressed at the joint between the housing 225 and the connecting seat 224.

As shown in Figure 7, the main control cavity 51a has a first cavity portion 51a-1, and a second cavity portion 51a-2 and a cavity corner portion 51a-3; the first cavity portion 51a-1 and the second cavity portion 51a-2 are respectively located on different sides of the valve body 1; the cavity corner portion 51a-3 extends from the side of the valve body 1 where the first cavity portion 51a-1 is provided to the side of the valve body 1 where the second cavity portion 51a-2 is provided by going around a corner of the valve body 1; a part of the main electronic control board 4 is provided in the first cavity portion 51a-1, and the other part is provided in the cavity corner portion 51a-3. This design increases the volume of the main control cavity 51a, so that the main electronic control board 4 has a greater extension space. A corner of the valve body 1 refers to an intersection of the outer surfaces of two adjacent sides of the valve body 1.

In addition, the valve assembly 2 is electrically connected to the part of the main electronic control board 4 located in the cavity corner portion 51a-3. This design makes the pin required for the electrical connection shorter.

The second cavity portion 51a-2 is located on the side of the valve body 1 where the valve assembly 2 is provided; the valve assembly sensors 32 and 33 are arranged in the second cavity portion 51a-2. The valve assembly sensors 32 and 33 are electrically connected to the part of the main electronic control board 4 located in the cavity corner portion 51a-3. More specifically, referring to Figure 7, the valve assembly sensors 32 and 33 are installed on the connecting circuit boards 401 and 402 and are electrically connected to the connecting circuit boards 401 and 402. The connecting circuit boards 401 and 402 are provided in the main control cavity 51a and fixedly connected to the main housing 51. The connecting circuit boards 401 and 402 are electrically connected to the main electronic control board 4 through pins.

As shown in Figures 5 and 7, the main housing 51 extends from one side of the valve body 1 to the other side of the valve body 1 by going around a corner of the valve body 1. More specifically, the main housing 51 extends from the side of the valve body 1 where the main electronic control board 4 is provided to the other side of the valve body 1 where the valve assembly 2 is provided by going around a corner of the valve body 1. This solution improves the integrity of the main housing 51 and is beneficial for the assembling and manufacturing of the electronic expansion valves 92 and 94.

As shown in Figures 3, 5 and 7, the electronic expansion valves 92 and 94 further comprise a housing connector 73; the housing connector 73 connects the main housing 51 and the valve body 1; one end of the housing connector 73 is connected to the main housing 51 on the side of the valve body 1 where the valve assembly 2 is provided, and the other end of the housing connector 73 is connected to the valve body 1 on the side opposite to the side of the valve body 1 where the main electronic control board 4 is provided. The housing connector 73 is provided to improve the stability of the main housing 51 connected to the valve body 1.

As shown in Figures 3, 8, 8, 9A to 9D, the side of the valve body 1 with the refrigerant sensor 31 is provided with a first flat portion 13 and a first protrusion 14; the first protrusion 14 protrudes from the first flat portion 13 in a direction opposite to the direction in which the sensor 31 is inserted into the valve body 1; the sensor 31 is configured to be inserted into the first protrusion 14. The second mounting cavity 16 is provided on the first protrusion 14. With this design, the first protrusion 14 has enough thickness to cooperate with the connector used to fix the refrigerant sensor 31. The first protrusion 14 is provided with a connecting hole 14a for connecting the refrigerant sensor 31, and the connecting hole 14a is used for cooperating with the connector fixing the refrigerant sensor 31.

The side of the main housing 51 close to the valve body 1 is provided with a second flat portion 511 and a second protrusion 512; the second protrusion 512 protrudes from the second flat portion 511 in the same direction as the direction in which the sensor 31 is inserted into the valve body 1; the second flat portion 511 is arranged opposite to the first protrusion 14; the second protrusion 512 is arranged opposite to the first flat portion 13. This design helps to increase the volume of the main control cavity 51a.

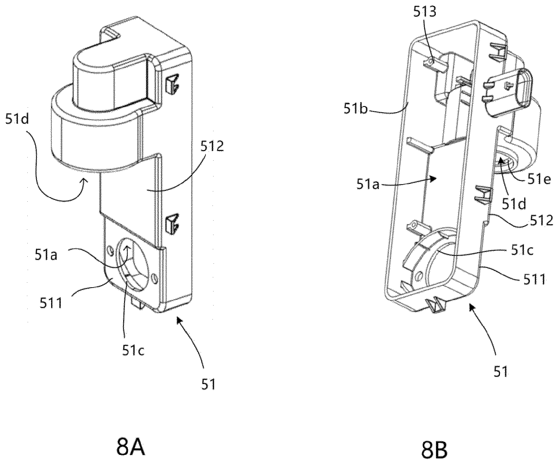

As shown in Figures 5 and 8B, the main electronic control board 4 may be fixed on the main housing 51. For example, the four corners of the main electronic control board 4 may be fixed on the main housing 51 by screws. This design helps to increase the installation stability of the main electronic control board 4 in the main control cavity 51a. Figure 8B shows the cylindrical hole 513 on the main housing 51 that is used to fix the main electronic control board 4.

As shown in Figures 3, 4, 5 and 6, the electronic expansion valves 92 and 94 further comprise first valve body seals 801, second valve body seals 802 and third valve body seals 803.

The first valve body seal 801 is provided in the second mounting cavity 16 of the valve body 1 and is arranged around the refrigerant sensor 31; the first valve body seal 801 is tightly compressed by the valve body 1 and the refrigerant sensor 31.

The second valve body seal 802 and the third valve body seal 803 are separately provided in the first mounting cavity 15 and are arranged around the valve assembly 2; the second valve body seal 802 and the third valve body seal 803 are both compressed by the valve body 1 and the valve assembly 2.

More specifically, the second valve body seal 802 and the third valve body seal 803 are respectively arranged around the valve seat 221 of the valve assembly 2. The valve hole 221a of the valve seat 221 is located between the second valve body seal 802 and the third valve body seal 803 in the axial direction of the valve assembly 2. This ensures that the refrigerant in the first refrigerant passage 11 can entirely pass through the valve hole 221a.

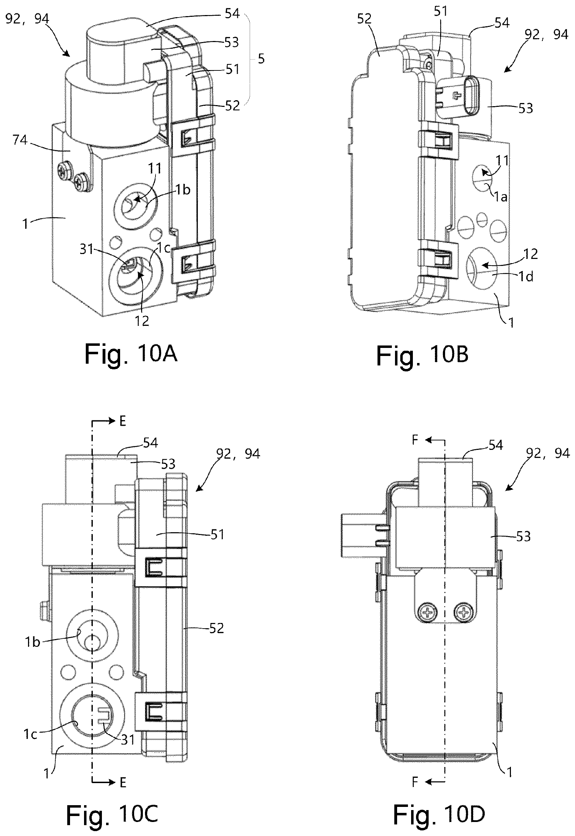

Figures 10A to 10D and Figures 11, 12, 13, 14A, 14B, 15A and 15B show a second embodiment of the electronic expansion valves 92 and 94 in the present invention. The parts and components in the second embodiment are marked by the same numerals as those in the first embodiment, and the parts in the second embodiment that are the same as those in the technical solution of the first embodiment will not be repeated.

Referring to Figures 10A to 10D and Figures 11, 12, 13, 15A and 15B, the housing assembly 5 further comprises an auxiliary housing 53; the auxiliary housing 53 has a drive cavity 53a and a valve assembly hole 53b; the valve assembly hole 53b is connected to the drive cavity 53a; the valve assembly 2 goes through the valve assembly hole 53b; a part of the valve assembly 2 is located in the drive cavity 53a and is electrically connected to the main electronic control board 4; the other part of the valve assembly 2 is located outside the drive cavity 53a and is used to throttle refrigerant in the first refrigerant channel 11; the auxiliary housing 53 is detachably connected to the main housing 51. With this solution, the electronic expansion valves 92 and 94 are highly modularized and easy to disassemble.

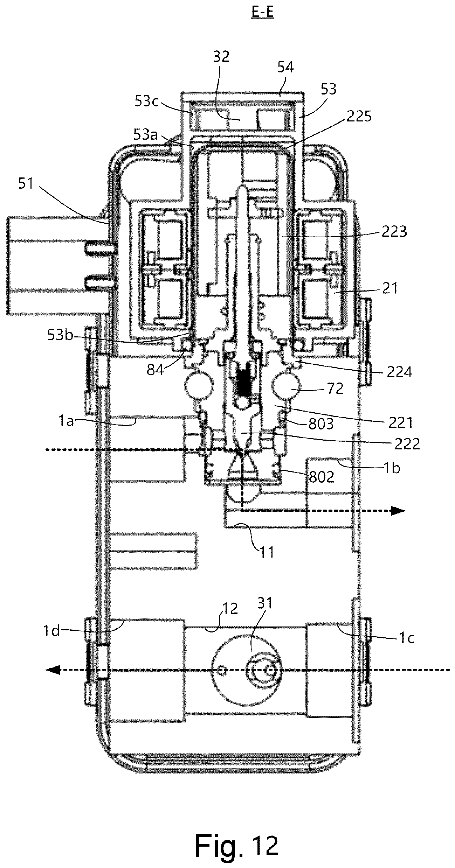

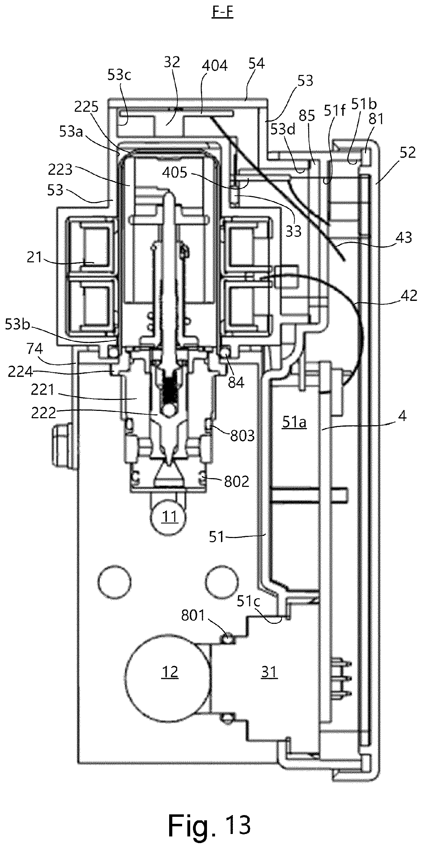

Again, referring to Figures 12 and 13, the coil assembly 21 is fixed in the drive cavity 53a as an insert by the injection molding process. The valve element assembly 22 is inserted into the drive cavity 53a through the valve assembly hole 53b and is positioned in the middle of the coil assembly 21. The coil assembly 21 is electrically connected to the main electronic control board 4 in the main control cavity 51a through the flexible conductive part 42. The valve seat 221 and the valve element 222 are arranged outside the drive cavity 53a.

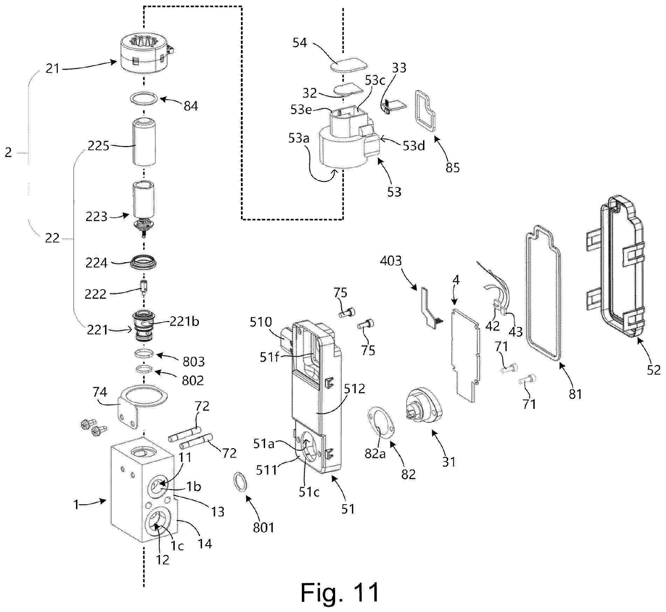

As shown in Figures 11, 12 and 13, the valve assembly seal 84 is arranged along the circumference of the valve assembly hole 53b; the valve assembly seal 84 is tightly held between the valve assembly 2 and the auxiliary housing 53 to seal the valve assembly hole 53b. The valve assembly seal 84 is pressed on the cover 225 of the valve assembly 2 by the auxiliary housing 53 along the radial direction of the valve assembly 2. More specifically, the valve assembly seal 84 is pressed at the joint between the housing 225 and the connecting seat 224.

As shown in Figures 11, 12, 13, 14A, 14B, 15A and 15B, the auxiliary housing 53 further has an auxiliary control cavity 53c and an auxiliary connection opening 53d; the auxiliary connection opening 53d is connected to the auxiliary control cavity 53c; the main housing 51 has a main connection opening 51f; the main connection opening 51f is connected to the main control cavity 51a; the auxiliary connection opening 53d is provided to be connected to the main connection opening 51f, so that the auxiliary control cavity 53c is connected to the main control cavity 51a. The flexible conductive part 42 goes through the main connection opening 51f and the auxiliary connection opening 53d to electrically and detachably connect the main electronic control board 4 and the valve assembly 2. The flexible conductive part 42 may be a flexible flat cable. One end of the flexible conductive part 42 is configured to snap onto the main electronic control board 4 and electrically connected thereto, and the other end is welded to the valve assembly 2.

Again, referring to Figures 12, 13 and 15A, the auxiliary control cavity 53c and the main control cavity 51a are respectively located on different sides of the valve body 1, for example, on two adjacent sides; the main control cavity 51a is located on the side of the valve body 1 where the main electronic control board 4 is provided. The auxiliary control cavity 53c is located on the side of the valve body 1 with the valve assembly 2.

The housing assembly 5 further comprises an auxiliary cover 54; the auxiliary housing 53 has an auxiliary opening 53e, which is connected to the auxiliary control cavity 53c; the auxiliary cover 54 is used to cover the auxiliary housing 53 to close the auxiliary opening 53e. The auxiliary cover 54 may be welded to the auxiliary housing 53.

The electronic expansion valves 92 and 94 further comprise connection seals 85; the connection seal 85 is arranged along the circumference of the auxiliary connection opening 53d and the main connection opening 51f; the connection seal 85 is tightly held between the main housing 51 and the auxiliary housing 53 to seal the auxiliary connection opening 53d and the main connection opening 51f.

The valve assembly sensors 32 and 33 are provided in the auxiliary control cavity 53c. The flexible conductive part 43 goes through the main connection opening 51f and the auxiliary connection opening 53d to electrically and detachably connect the main electronic control board 4 and the valve assembly sensors 32 and 33. More specifically, referring to Figure 13, the valve assembly sensors 32 and 33 are installed on the connecting circuit boards 404 and 405 and are electrically connected to the connecting circuit boards 404 and 405. The connecting circuit boards 404 and 405 are provided in the auxiliary control cavity 53c and fixedly connected to the main housing 51. The connecting circuit boards 404 and 405 are electrically connected to the main electronic control board 4 through the flexible conductive parts 43.

The flexible conductive part 43 may be a flexible flat cable. One end of the flexible conductive part 43 is configured to snap onto the main electronic control board 4 and electrically connected thereto, and the other end is welded to the connecting circuit boards 404 and 405.

As shown in Figures 11 and 13, the electronic expansion valves 92 and 94 further comprise a housing connector 74; the housing connector 74 connects the auxiliary housing 53 and the valve body 1; one end of the housing connector 74 is connected to the auxiliary housing 53 on the side of the valve body 1 where the valve assembly 2 is provided, and the other end of the housing connector 74 is connected to the valve body 1 on the side opposite to the side of the valve body 1 where the main electronic control board 4 is provided. This solution can provide a stable connection of the auxiliary housing 53 on the valve body 1.

As shown in Figure 11, the electronic expansion valves 92 and 94 further comprise a housing assembly connector 75; the auxiliary housing 53 is detachably connected to the main housing 51 through the housing assembly connector 75. The housing assembly connector 75 may be a screw.

As shown in Figure 11, the main housing 51 has an interface portion 510. The interface portion 510 is electrically connected to the main electronic control board 4 by connecting the circuit board 403. The interface portion 510 is used for external connection.

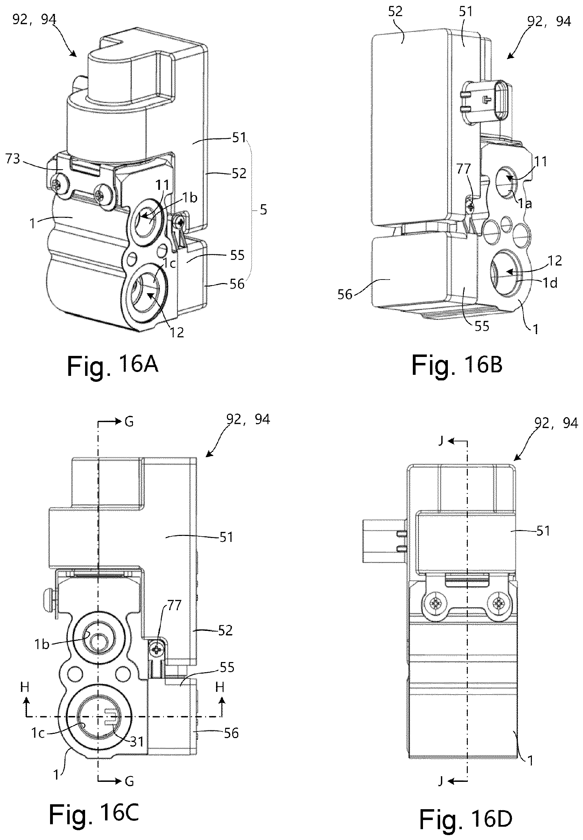

Figures 16A to 16D and Figures 17, 18, 19, 20, 21A, 21B, 22A and 22B show a third embodiment of the electronic expansion valves 92 and 94 in the present invention. The parts and components in the third embodiment are marked by the same numerals as those in the first embodiment, and the parts in the third embodiment that are the same as those in the technical solution of the first embodiment will not be repeated.

As shown in Figures 16A to 16D and Figures 17, 22A and 22B, the housing assembly 5 further comprises an auxiliary housing 55; the auxiliary housing 55 has an auxiliary control cavity 55a and a sensor hole 55b; the sensor hole 55b is connected to the auxiliary control cavity 55a; the refrigerant sensor 31 goes through the sensor hole 55b; a part of the refrigerant sensor 31 is located in the auxiliary control cavity 55a and is electrically connected to the main electronic control board 4; the other part of the refrigerant sensor 31 is located outside the auxiliary control cavity 55a and is used to detect the refrigerant in the second refrigerant channel 12; the auxiliary housing 55 is detachably connected to the main housing 51. With this solution, the electronic expansion valves 92 and 94 are highly modularized and easy to disassemble.

The part of the refrigerant sensor 31 located in the auxiliary control cavity 55a is tightly pressed against the main housing 55.

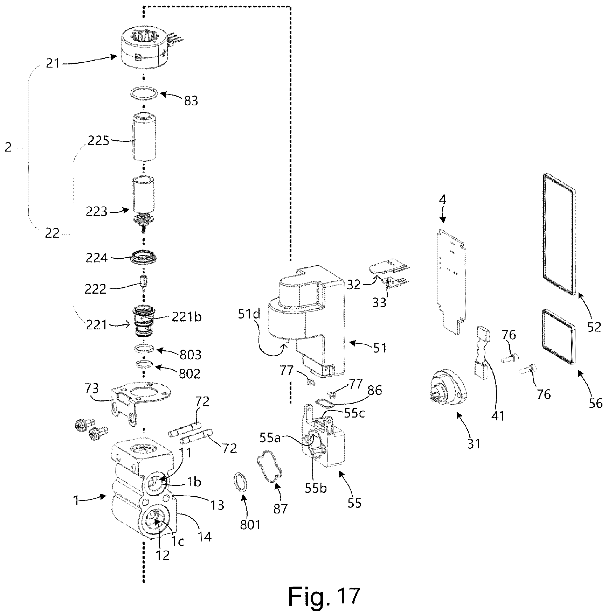

Referring to Figures 17, 19, 21A, 21B, 22A and 22B, the auxiliary housing 55 further has an auxiliary connection opening 55c; the auxiliary connection opening 55c is connected to the auxiliary control cavity 55a; the main housing 51 has a main connection opening 51g; the main connection opening 51g is connected to the main control cavity 51a; the auxiliary connection opening 55c is provided to be connected to the main connection opening 51g, so that the auxiliary control cavity 55a is connected to the main control cavity 51a. The flexible conductive part 41 goes through the main connection opening 51g and the auxiliary connection opening 55c, to electrically and detachably connect the main electronic control board 4 and the refrigerant sensor 31. The flexible conductive part 41 may be a flexible flat cable. One end of the flexible conductive part 41 is configured to snap onto the main electronic control board 4 and electrically connected thereto, and the other end is welded to the refrigerant sensor 31.

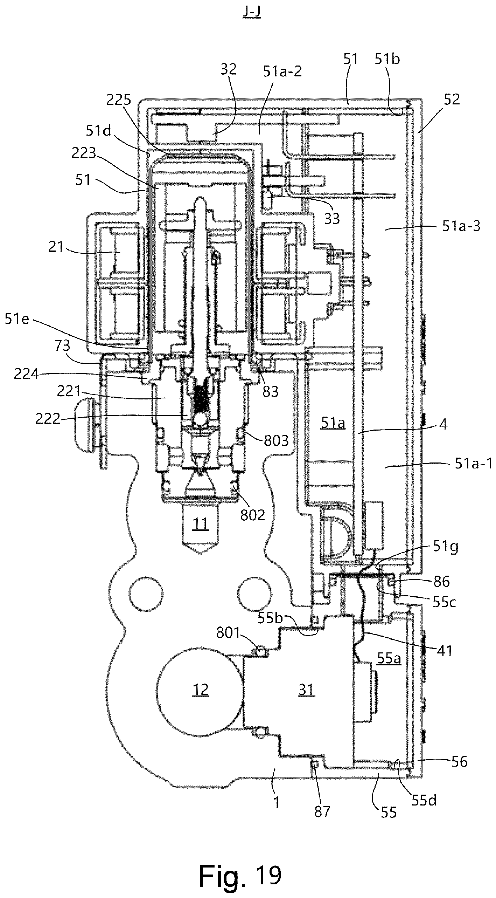

Again, referring to Figure 19, the auxiliary control cavity 55a and the main control cavity 51a are both located on the side of the valve body 1 with the main electronic control board 4. The auxiliary control cavity 55a and the main control cavity 51a are arranged side by side.

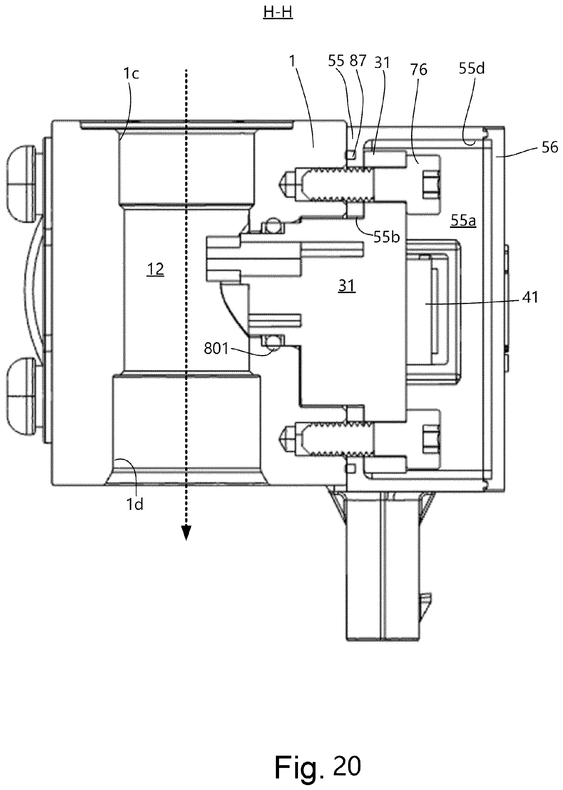

As shown in Figures 17 and 20, the housing assembly 5 further comprises an auxiliary cover 56; the auxiliary housing 55 has an auxiliary opening 55d, which is connected to the auxiliary control cavity 55a; the auxiliary cover 56 is used to cover the auxiliary housing 55 to close the auxiliary opening 55d. In this embodiment, the auxiliary cover 56 may be welded to the auxiliary housing 55. The main cover 52 may be welded to the main housing 51. The auxiliary opening 55d and the main opening 51b are both opened away from the valve body 1.

As shown in Figures 17 and 19, the electronic expansion valves 92 and 94 further comprise connection seals 86; the connection seal 86 is arranged along the circumference of the auxiliary connection opening 55c and the main connection opening 51g; the connection seal 86 is tightly held between the main housing 51 and the auxiliary housing 55, to seal the auxiliary connection opening 55c and the main connection opening 51g.

Again, referring to Figure 19, the refrigerant sensor 31, the auxiliary housing 55 and the valve body 1 are stacked and are joined in the stacking direction to become one unit; one of the auxiliary housing 55 or the refrigerant sensor 31 is tightly held between the valve body 1 and the other one of the auxiliary housing 55 and the refrigerant sensor 31. Such a design helps to reduce the assembly steps of the electronic expansion valves 92 and 94, and achieve a compact structure of the electronic expansion valves 92 and 94.

As shown in Figures 17 and 20, the electronic expansion valves 92 and 94 further comprise a sensor connector 76; the stacked refrigerant sensor 31, auxiliary housing 55 and valve body 1 are connected to become one unit through the sensor connector 76. The sensor connector 76 may be a screw. The sensor connector 76 goes through at least one of the auxiliary housing 55 and the refrigerant sensor 31 and is fixedly connected to the valve body 1.

In the embodiment shown in Figure 20, the auxiliary housing 55 is held between the refrigerant sensor 31 and the valve body 1, and the sensor connector 76 goes through the refrigerant sensor 31 and the auxiliary housing 55.

In embodiments not shown, the part of the refrigerant sensor 31 located inside the valve body 1 is threaded to the valve body 1, and the part of the refrigerant sensor 31 outside the valve body tightly presses the auxiliary housing 55 onto the valve body 1.

As shown in Figures 17 and 20, the electronic expansion valves 92 and 94 further comprise sensor seals 87; the sensor seal 87 is arranged along the circumference of the sensor hole 55b; the sensor seal 87 is tightly held between the auxiliary housing 55 and the valve body 1 to seal the sensor hole 55b.

The electronic expansion valves 92 and 94 further comprise a housing assembly connector 77; the auxiliary housing 55 is detachably connected to the main housing 51 through the housing assembly connector 77. The housing assembly connector 77 may be a screw.

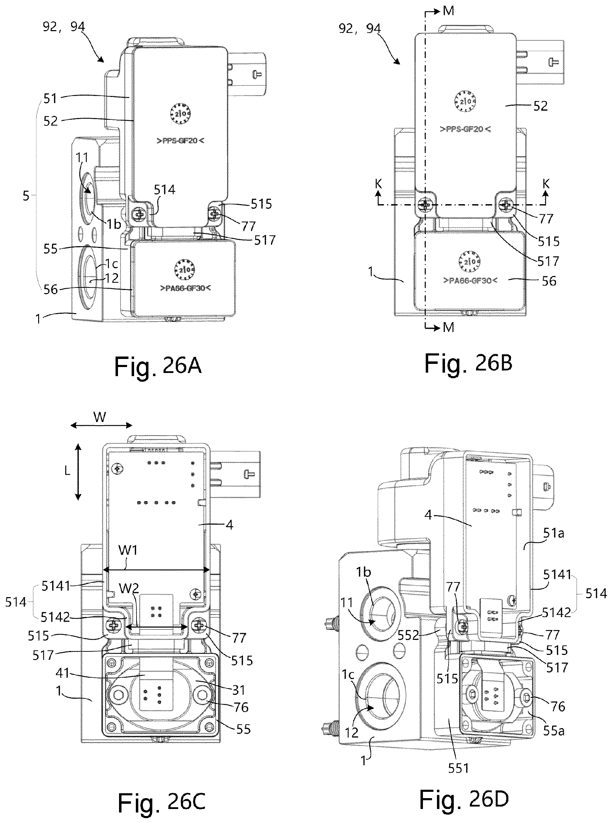

Figs. 26A - 30 show a fourth embodiment of the electronic expansion valves 92, 94 in the present invention. Components in the fourth embodiment which are the same as in the previous three embodiments use the same reference signs, and parts of the fourth embodiment which are the same as the technical solution of the previous three embodiments are not described again.

As shown in Figs. 26A - 30, the housing assembly 5 comprises a main housing 51, the main housing 51 comprising a first main body portion 514 and a first connecting portion 515; the first main body portion 514 has a main control cavity 51a; the main electronic control board 4 is disposed in the main control cavity 51a; wherein the valve assembly 2 and the main electronic control board 4 are respectively located on different sides of the valve body 1; the first connecting portion 515 is fixed to the valve body 1, wherein the first connecting portion 515 and the main electronic control board 4 are located on the same side of the valve body 1. Such a design enables the main control cavity 51a to have a larger extension space at the side of the valve body 1 where the main electronic control board 4 is disposed, thus enabling the main control cavity 51a to accommodate a main electronic control board 4 of larger size; the main electronic control board 4 of larger size can integrate a greater number of electronic devices, and this is very advantageous for achieving intelligent control of the electronic expansion valve; moreover, the main housing 51 is fixed to the valve body 1 so that the main housing 51 is mounted stably.

As shown in Figs. 26C and 26D, the first connecting portion 515 is located outside the main control cavity 51a. This allows the operation of fixing the first connecting portion 515 to the valve body 1 to be performed outside the main control cavity 51a, thus avoiding the need to open the main control cavity 51a.

Continuing to refer to Fig. 26C, the first main body portion 514 has a wide portion 5141 and a narrow portion 5142 arranged in a length direction L; in a width direction W transverse to the length direction L, the width W1 of the wide portion 5141 is greater than the width W2 of the narrow portion 5142; wherein the first connecting portion 515 and the wide portion 5141 are arranged in the length direction L; and the first connecting portion 515 and the narrow portion 5142 are arranged in the width direction W. In this embodiment, a direction transverse to the length direction L may be, but is not limited to being, a direction perpendicular to the length direction L. In Fig. 26C, the width direction W is perpendicular to the length direction L. Such a design makes the structure of the main housing 51 compact.

Continuing to refer to Fig. 26C, two first connecting portions are distributed on two sides of the narrow portion 5142 in the width direction W. More specifically, the two first connecting portions 515 are arranged symmetrically with respect to the centerline of the first main body portion 514 in the length direction L.

Continuing to refer to Fig. 26C, in the length direction L, the first connecting portion 515 extends from the wide portion 5141 until it is flush with an edge of the narrow portion 5142; and/or in the width direction W, the first connecting portion 515 extends from the narrow portion 5142 until it is flush with an edge of the wide portion 5141. Such a design makes the structure of the main housing 51 more compact.

In an embodiment which is not shown, a sleeve may be provided between the first connecting portion 515 and the valve body 1, to fill a gap between the first connecting portion 515 and the valve body 1. Two ends of the sleeve may respectively abut the first connecting portion 515 and the valve body 1.

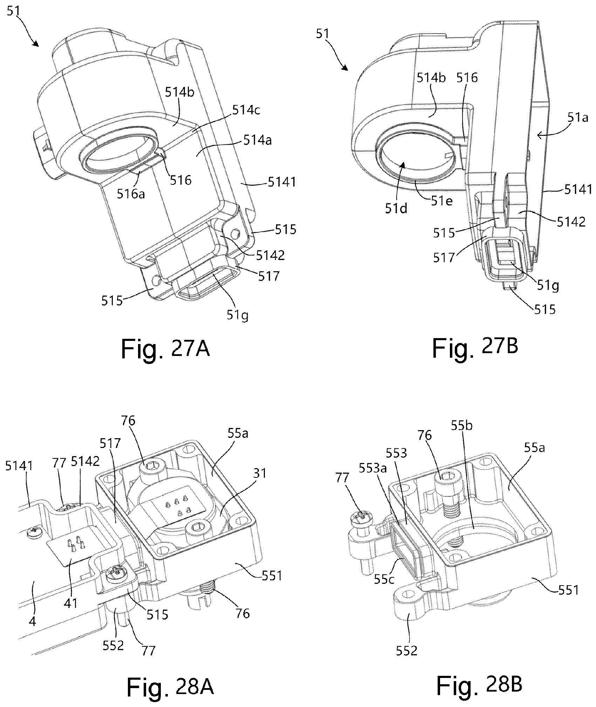

Referring to Figs. 26A, 26D, 28A and 28B, the housing assembly 5 further comprises an auxiliary housing 55; the auxiliary housing 55 comprises a second main body portion 551 and a second connecting portion 552; the second main body portion 551 has an auxiliary control cavity 55a and a sensor hole 55b; the sensor hole 55b is connected to the auxiliary control cavity 55a; the refrigerant sensor 31 goes through the sensor hole 55b; wherein one part of the refrigerant sensor 31 is located in the auxiliary control cavity 55a, and electrically connected to the main electronic control board 4; another part of the refrigerant sensor 31 is located outside the auxiliary control cavity 55a, and used to detect refrigerant in the second refrigerant channel 12; and the second connecting portion 552 is detachably connected to the first connecting portion 515.

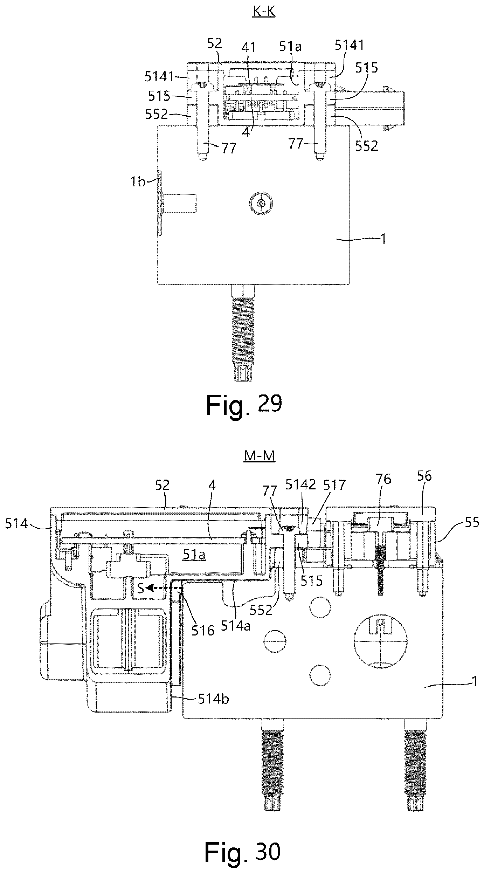

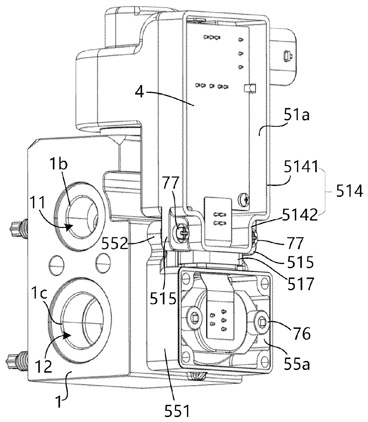

As shown in Figs. 29 and 30, the first connecting portion 515, the second connecting portion 552 and the valve body 1 are stacked, and joined in the stacking direction to become one unit; wherein one of the first connecting portion 515 and the second connecting portion 552 is tightly held between the valve body 1 and the other of the first connecting portion 515 and the second connecting portion 552. In Figs. 29 and 30, the second connecting portion 552 is tightly held by the first connecting portion 515 and the valve body 1.

The housing assembly connector 77 joins the stacked first connecting portion 515, second connecting portion 552 and valve body 1 to form one unit, wherein the housing assembly connector 77 passes through at least one of the first connecting portion 515 and the second connecting portion 552. In Figs. 29 and 30, the housing assembly connector 77 passes through the first connecting portion 515 and the second connecting portion 552, and is fixedly connected to the valve body 1. With such a design, the housing assembly connector 77 not only has the function of fixedly connecting the main housing 51 and the auxiliary housing 55 together, but also has the function of fixing the main housing 51 and the auxiliary housing 55 to the valve body 1 simultaneously; as a result, the number of connectors in the electronic expansion valves 92, 94 can be reduced, making the structure of the electronic expansion valves 92, 94 compact.

Referring to Figs. 27A, 27B, 29 and 30, the first main body portion 514 extends from one side of the valve body 1 to another side of the valve body 1 by going around a corner of the valve body 1; wherein the first main body portion 514 has a first surface 514a, a connecting surface 514c and a second surface 514b which are contiguous; the first surface 514a and the second surface 514b are respectively located on different sides of the valve body 1, and arranged facing the valve body 1, and the connecting surface 514c is arranged facing the corner of the valve body 1; wherein the first surface 514a and the main electronic control board 4 are located on the same side of the valve body 1, the second surface 514b and the valve assembly 2 are located on the same side of the valve body 1; and the connecting surface 514c extends from the first surface 514a to the second surface 514b by going around the corner of the valve body 1.

As shown in Figs. 27A and 30, the main housing 51 further comprises a step portion 516; the step portion 516 is respectively connected to the first surface 514a, the connecting surface 514c and the second surface 514b. Such a design increases the structural strength of the main housing 51.

Continuing to refer to Figs. 27A and 30, the step portion 516 comprises a support face 516a; the support face 516a is configured to be supported on the valve body 1, and the support face 516a and the valve assembly 2 are located on the same side of the valve body 1. The valve body 1 applies an action force S to the support face 516a, the action force S being perpendicular to the support face 516a and directed toward the outside of the valve body 1, and the point of action of the action force S being on the step portion 516. Such a design increases the stability of installation of the main housing 51 on the valve body 1.

Continuing to refer to Figs. 26A - 28B, it can be seen that the main housing 51 further comprises a main opening portion 517, an inner wall of the main opening portion 517 defining a main connection opening 51g. The auxiliary housing 5 further comprises an auxiliary opening portion 553, an inner wall of the auxiliary opening portion 553 defining an auxiliary connection opening 55c. The main opening portion 517 and the auxiliary opening portion 553 are nested one within the other, so that the main connection opening 51g is connected to the auxiliary connection opening 55c. Of the main opening portion 517 and the auxiliary opening portion 553 nested one within the other, the one located at the inside is provided, on its outer wall, with a groove for positioning a connection seal 86. In Fig. 2B, the groove is an annular groove 553a arranged on an outer wall of the auxiliary opening portion 553. The connection seal 86 is adapted to be positioned in the annular groove 553a, to seal a gap between the outer wall of the auxiliary opening portion 553 and the inner wall of the main opening portion 517.

To secure the valve assembly 2 and the valve body 1, those skilled in the art can also draw from the content of the description of the present invention that: the electronic expansion valve comprises: a valve body 1, which has a first refrigerant inlet 1a and a first refrigerant outlet 1b, wherein a first refrigerant channel 11 is formed between the first refrigerant inlet 1a and the first refrigerant outlet 1b; and a valve assembly 2, used to throttle the refrigerant in the first refrigerant passage 11; the electronic expansion valves 92 and 94 further comprise: a valve assembly connector 72; the valve assembly connector 72 is configured to be inserted into the valve body 1 from the side of the valve body 1 without the valve assembly 2 and to position-limitedly cooperate with a part of the valve assembly 2 located in the valve body 1, thereby fixing the valve assembly 2 on the valve body 1. With such a solution, the valve assembly 2 will not interact with the valve assembly connector 72 when it is fixed on the valve body 1, and the fixing method is relatively simple.

The valve assembly connector 72 is configured to be inserted into the valve body 1 from the side of the valve body 1 with the valve assembly 2.

The valve body 1 has a first mounting cavity 15 and a limiting hole 1e; the first mounting cavity 15 is provided on one side of the valve body 1, and the limiting hole 1e is provided on the other side of the valve body 1; wherein the first mounting cavity 15 allows the insertion of the valve assembly 2, and the limiting hole 1e allows the insertion of the valve assembly connector 72; the limiting hole 1e is connected to the first mounting cavity 15 inside the valve body 1, so that the valve assembly connector 72 can be located in the first mounting cavity 15 after being inserted into the limiting hole 1e, thereby position-limitedly cooperating with the part of the valve assembly 2 located in the first mounting cavity 15.

The valve assembly 2 has a recess 221b for limited cooperation with the valve assembly connector 72.

The valve assembly connector 72 is held between the inner wall of the limiting hole 1e and the recess 221b.

The number of valve assembly connectors 72 is two, which respectively position-limitedly cooperate with the two sides of the valve assembly 2.

The valve seat 221 of the valve assembly 2 position-limitedly cooperates with the valve assembly connector 72.

The two valve assembly connectors 72 are symmetrically arranged with respect to the valve assembly 2.

To detect the working status of the valve assembly 2, those skilled in the art can also draw from the content of the description of the present invention that: an electronic expansion valve comprises: a valve body 1, which has a first refrigerant inlet 1a and a first refrigerant outlet 1b, wherein a first refrigerant channel 11 is formed between the first refrigerant inlet 1a and the first refrigerant outlet 1b; a valve assembly 2, used to throttle the refrigerant in the first refrigerant passage 11; and a main electronic control board 4, electrically connected to the valve assembly 2; the electronic expansion valves 92 and 94 further comprise: valve assembly sensors 32 and 33; the valve assembly sensors 32 and 33 are electrically connected to the main electronic control board 4; the valve assembly sensors 32 and 33 are used to detect the valve assembly 2; the valve assembly 2 and the main electronic control board 4 are respectively located on different sides of the valve body 1. With such a solution, the working status of the valve assembly 2 can be detected. The valve assembly sensors 32 and 33 may be, but are not limited to, Hall sensors.

The electronic expansion valves 92 and 94 further comprise a housing assembly 5, which comprises a main housing 51; the main housing 51 has a main control cavity 51a; the main electronic control board 4 is provided in the main control cavity 51a; the valve assembly sensors 32 and 33 are provided in the main control cavity 51a.

The valve assembly sensor 32 is arranged at the end of the valve assembly 2 away from the valve body 1 along the axis of the valve assembly 2. In this embodiment, the valve assembly sensor 32 is an angle type Hall sensor.

The valve assembly sensor 33 is located on the outside of valve assembly 2 in the radial direction. In this embodiment, the valve assembly sensor 32 is a switch type Hall sensor.

The main control cavity 51a has a first cavity portion 51a-1, and a second cavity portion 51a-2 and a cavity corner portion 51a-3; the first cavity portion 51a-1 and the second cavity portion 51a-2 are respectively located on different sides of the valve body 1; the cavity corner portion 51a-3 extends from the side of the valve body 1 provided with the first cavity portion 51a-1 to the side of the valve body 1 provided with the second cavity portion 51a-2 by going around a corner of the valve body 1; wherein a part of the main electronic control board 4 is provided in the first cavity portion 51a-1, and the other part is provided in the cavity corner portion 51a-3.

The valve assembly sensors 32 and 33 are provided in the second cavity portion 51a-2. The valve assembly sensors 32 and 33 are electrically connected to the part of the main electronic control board 4 located in the cavity corner portion 51a-3.

The second cavity portion 51a-2 is located on the side of the valve body 1 with the valve assembly 2, and the first cavity portion 51a-1 is located on the side of the valve body 1 with the main electronic control board 4.

The electronic expansion valves 92 and 94 further comprise a housing assembly 5, which comprises a main housing 51 and an auxiliary housing 53; the auxiliary housing 53 is detachably connected to the main housing 51; the main housing 51 has a main control cavity 51a; the main electronic control board 4 is provided in the main control cavity 51a; the auxiliary housing 53 has an auxiliary control cavity 53c, and the valve assembly sensors 32 and 33 are provided in the auxiliary control cavity 53c.

The auxiliary housing 53 further has an auxiliary connection opening 53d; the auxiliary connection opening 53d is connected to the auxiliary control cavity 53c; the main housing 51 has a main connection opening 51f; the main connection opening 51f is connected to the main control cavity 51a; the auxiliary connection opening 53d is provided to be connected to the main connection opening 51f, so that the auxiliary control cavity 53c is connected to the main control cavity 51a; the flexible conductive part 43 goes through the main connection opening 51f and the auxiliary connection opening 53d to electrically and detachably connect the main electronic control board 4 and the valve assembly sensors 32 and 33.

The auxiliary control cavity 53c is located on the side of the valve body 1 with the valve assembly 2.

To secure the refrigerant sensor 31 on the electronic expansion valves 92 and 94, those skilled in the art can also draw from the content of the description of the present invention that: an electronic expansion valve comprises: a valve body 1, which has a first refrigerant inlet 1a, a first refrigerant outlet 1b, a second refrigerant inlet 1c and a second refrigerant outlet 1d, wherein a first refrigerant channel 11 is formed between the first refrigerant inlet 1a and the first refrigerant outlet 1b, and a second refrigerant channel 12 is formed between the second refrigerant inlet 1c and the second refrigerant outlet 1d; a valve assembly 2, used to throttle the refrigerant in the first refrigerant passage 11; a refrigerant sensor 31, used to detect the refrigerant in the second refrigerant channel 12; a main electronic control board 4, electrically connected to both the valve assembly 2 and the refrigerant sensor 31; the electronic expansion valves 92 and 94 further comprise: a housing assembly 5, comprising a main housing 51; the main housing 51 has a main control cavity 51a; the main electronic control board 4 is provided in the main control cavity 51a; the refrigerant sensor 31 is tightly pressed against the housing assembly 5. This solution can improve the installation stability of the refrigerant sensor 31 on the electronic expansion valves 92 and 94.

The refrigerant sensor 31, the main housing 51 and the valve body 1 are stacked, and are joined in the stacking direction to become one unit; one of the main housing 51 or the refrigerant sensor 31 is tightly held between the valve body 1 and the other one of the main housing 51 and the refrigerant sensor 31.

The electronic expansion valves 92 and 94 further comprise a sensor connector 71; the stacked refrigerant sensor 31, main housing 51 and valve body 1 are connected to become one unit through the sensor connector 71.

The part of the refrigerant sensor 31 located in the main control cavity 51a is tightly pressed against the main housing 51.

The housing assembly 5 further comprises an auxiliary housing 55; the auxiliary housing 55 is detachably connected to the main housing 51; the refrigerant sensor 31 is tightly pressed against the auxiliary housing 55.

The refrigerant sensor 31, the auxiliary housing 55 and the valve body 1 are stacked and are joined in the stacking direction to become one unit; one of the auxiliary housing 55 or the refrigerant sensor 31 is tightly held between the valve body 1 and the other one of the auxiliary housing 55 and the refrigerant sensor 31.

The electronic expansion valves 92 and 94 further comprise a sensor connector 76; the stacked refrigerant sensor 31, auxiliary housing 55 and valve body 1 are connected to become one unit through the sensor connector 76.

The auxiliary housing 55 has an auxiliary control cavity 55a and a sensor hole 55b; the sensor hole 55b is connected to the auxiliary control cavity 55a; the refrigerant sensor 31 goes through the sensor hole 55b; a part of the refrigerant sensor 31 is located in the auxiliary control cavity 55a and is electrically connected to the main electronic control board 4; the other part of the refrigerant sensor 31 is located outside the auxiliary control cavity 55a and is used to detect the refrigerant in the second refrigerant channel 12.

The part of the refrigerant sensor 31 located in the auxiliary control cavity 55a is tightly pressed against the main housing 55.

As shown in Figure 23, the pin of the refrigerant sensor 31 goes through the sensor hole 51c and extends into the main control cavity 51a to connect to the main electronic control board 4. The part of the refrigerant sensor 31 located outside the main control cavity 51a is tightly held between the main housing 51 and the valve body 1.

In Figure 23, the part of the refrigerant sensor 31 located outside the main control cavity 51a is tightly pressed against the main housing 51. The main housing 51 has a main opening 51b facing away from the valve body 1. The main circuit board 4 is mounted in the main control cavity 51a through the main opening 51b.

As shown in Figure 24, the main housing 51 has a main opening 51b facing the valve body 1, and the main circuit board 4 is provided between the main housing 51 and the valve body 1 in the main control cavity 51a. The refrigerant sensor 31 is tightly held between the main housing 51 and the valve body 1. The main circuit board 4 is mounted in the main housing 51 through this opening.

Those skilled in the art can also obtain a method for manufacturing an electronic expansion valve according to the description of the present invention, which comprises a step of tightly pressing the refrigerant sensor 31 onto the housing assembly 5.

More specifically, the method for manufacturing an electronic expansion valve comprises a step of tightly pressing the refrigerant sensor 31 onto the main housing 51 or the auxiliary housing 55.

More specifically, the method for manufacturing an electronic expansion valve comprises a step of firstly stacking the refrigerant sensor 31, the main housing 51 and the valve body 1, and then joining the refrigerant sensor 31, the main housing 51 and the valve body 1 in the stacking direction to become one unit.

More specifically, the method for manufacturing an electronic expansion valve comprises a step of firstly stacking the refrigerant sensor 31, the auxiliary housing 55 and the valve body 1, and then joining the refrigerant sensor 31, the auxiliary housing 55 and the valve body 1 in the stacking direction to become one unit.

More specifically, the method for manufacturing an electronic expansion valve comprises a step of joining the refrigerant sensor 31, the main housing 51 and the valve body 1 in the stacking direction to become one unit through the sensor connector 71.

More specifically, the method for manufacturing an electronic expansion valve comprises a step of joining the refrigerant sensor 31, the auxiliary housing 55 and the valve body 1 in the stacking direction to become one unit through the sensor connector 76.

Although the present invention is disclosed as above in preferred embodiments, the embodiments are not intended to limit the present invention. Anyone skilled in the art can make possible changes and modifications without departing from the spirit and scope of the present invention. Any modification, equivalent change and modification made to the above embodiments according to the technical essence of the present invention without departing from the technical solution of the present invention should fall within the scope defined by the claims of the present invention.

## Claims

1. An electronic expansion valve, comprising:
a valve body (1), which has a first refrigerant inlet (1a) and a first refrigerant outlet (1b), wherein a first refrigerant channel (11) is formed between the first refrigerant inlet (1a) and the first refrigerant outlet (1b),
a valve assembly (2), used to throttle refrigerant in the first refrigerant channel (11), and
a main electronic control board (4), which is electrically connected to the valve assembly (2),
**characterized in that** electronic expansion valves (92, 94) further comprise:
a housing assembly (5), which comprises a main housing (51), the main housing (51) comprising a first main body portion (514) and a first connecting portion (515), the first main body portion (514) having a main control cavity (51a), and the main electronic control board (4) being provided in the main control cavity (51a), wherein the valve assembly (2) and the main electronic control board (4) are respectively located on different sides of the valve body (1); and the first connecting portion (515) is fixed to the valve body (1), wherein the first connecting portion (515) and the main electronic control board (4) are located on the same side of the valve body (1).

2. The electronic expansion valve as claimed in claim 1, **characterized in that** the first connecting portion (515) is located outside the main control cavity (51a).

3. The electronic expansion valve as claimed in claim 2, **characterized in that** the first main body portion (514) has a wide portion (5141) and a narrow portion (5142) arranged in a length direction (L);
in a width direction (W) transverse to the length direction (L), the width (W1) of the wide portion (5141) is greater than the width (W2) of the narrow portion (5142);
wherein the first connecting portion (515) and the wide portion (5141) are arranged in the length direction (L); and the first connecting portion (515) and the narrow portion (5142) are arranged in the width direction (W).

4. The electronic expansion valve as claimed in claim 3, **characterized in that** two said first connecting portions (515) are distributed on two sides of the narrow portion (5142) in the width direction (W).

5. The electronic expansion valve as claimed in claim 3, **characterized in that** in the length direction (L), the first connecting portion (515) extends from the wide portion (5141) until it is flush with an edge of the narrow portion (5142); and/or
in the width direction (W), the first connecting portion (515) extends from the narrow portion (5142) until it is flush with an edge of the wide portion (5141).

6. The electronic expansion valve as claimed in claim 1, **characterized in that** the valve body (1) further has a second refrigerant inlet (1c) and a second refrigerant outlet (1d), wherein a second refrigerant channel (12) is formed between the second refrigerant inlet (1c) and the second refrigerant outlet (1d) ;
the electronic expansion valves (92, 94) further comprise a refrigerant sensor (31) which is used to detect refrigerant in the second refrigerant channel (12); the main electronic control board (4) is electrically connected to the refrigerant sensor (31).

7. The electronic expansion valve as claimed in claim 6, **characterized in that** the housing assembly (5) further comprises an auxiliary housing (55), the auxiliary housing (55) comprising a second main body portion (551) and a second connecting portion (552) ;
the second main body portion (551) has an auxiliary control cavity (55a) and a sensor hole (55b); the sensor hole (55b) is connected to the auxiliary control cavity (55a); the refrigerant sensor (31) goes through the sensor hole (55b); a part of the refrigerant sensor (31) is located in the auxiliary control cavity (55a) and is electrically connected to the main electronic control board (4); the other part of the refrigerant sensor (31) is located outside the auxiliary control cavity (55a) and is used to detect refrigerant in the second refrigerant channel (12);
the second connecting portion (552) is detachably connected to the first connecting portion (515).

8. The electronic expansion valve as claimed in claim 7, **characterized in that** the first connecting portion (515), the second connecting portion (552) and the valve body (1) are stacked, and are joined in the stacking direction to become one unit; wherein one of the first connecting portion (515) and the second connecting portion (552) is tightly held between the valve body (1) and the other one of the first connecting portion (515) and the second connecting portion (552).

9. The electronic expansion valve as claimed in claim 8, **characterized in that** the electronic expansion valve (92, 94) further comprises a housing assembly connector (77); the housing assembly connector (77) joins the stacked first connecting portion (515), second connecting portion (552) and valve body (1) to form one unit, wherein the housing assembly connector (77) passes through at least one of the first connecting portion (515) and the second connecting portion (552).

10. The electronic expansion valve as claimed in claim 1, **characterized in that** the first main body portion (514) extends from one side of the valve body (1) to another side of the valve body (1) by going around a corner of the valve body (1);
wherein the first main body portion (514) has a first surface (514a), a connecting surface (514c) and a second surface (514b) which are contiguous; the first surface (514a) and the second surface (514b) are respectively located on different sides of the valve body (1), and arranged facing the valve body (1); wherein the first surface (514a) and the main electronic control board (4) are located on the same side of the valve body (1), the second surface (514b) and the valve assembly (2) are located on the same side of the valve body (1);
the connecting surface (514c) extends from the first surface (514a) to the second surface (514b) by going around a corner of the valve body (1).

11. The electronic expansion valve as claimed in claim 10, **characterized in that** the main housing (51) further comprises a step portion (516); the step portion (516) is respectively connected to the first surface (514a), the connecting surface (514c) and the second surface (514b).

12. The electronic expansion valve as claimed in claim 11, **characterized in that** the step portion (516) comprises a support face (516a); the support face (516a) is configured to be supported on the valve body (1), and the support face (516a) and the valve assembly (2) are located on the same side of the valve body (1).
